# EUROPÄISCHE PATENTSCHRIFT

(11) **EP 1 511 283 B1**
(45) Veröffentlichungstag und Bekanntmachung des Hinweises auf die Patenterteilung: **10.05.2006**
(21) Anmeldenummer: 03018482.4
(22) Anmeldetag: 14.08.2003
(51) Int. Cl.: H04M 3/22, H04Q 3/00

(54) **Geteiltes Kommunikationssystem mit betreiberindividueller Verwaltung von Rufnummernplänen**
Shared communications system with tenant-individual administration of numbering plans
Système de communications partagé avec administration des plans de numérotages individuelle aux locataire

(43) Veröffentlichungstag der Anmeldung: 02.03.2005
(73) Patentinhaber: Tenovis GmbH & Co. KG, 60326 Frankfurt am Main (DE)
(72) Erfinder: Braun, Heinz, 41593 Dormagen (DE); Henneke, Dietmar, 41462 Neuss (DE); Hiller, Helmut, 40593 Düsseldorf (DE); Kayser, Udo, 42285 Wupperal (DE); Kies, Eduard, 41564 Kaarst (DE); Pohler, Walter, 41564 Kaarst (DE); Rodewald, Frank, 50181 Bedburg (DE); Schneider, Norbert, 47800 Krefeld (DE); Wolf, Horst, 41564 Kaarst (DE)
(74) Vertreter: Walkenhorst, Andreas

(56) Entgegenhaltungen:
- EP-A- 0 557 644
- DE-A- 10 021 550
- PETER MITTERER ET AL: "Vermietung von Vermittlungsstellenressourcen" SIEMENS TECHNIK REPORT, Bd. 3, Nr. 9, Oktober 2000 (2000-10), Seite 117 XP007002260

## Beschreibung

Die Erfindung betrifft ein Verfahren zum Betrieb eines Kommunikationssystems und ein Kommunikationssystem, wobei insbesondere das Kommunikationssystem an ein öffentliches Netzwerk angeschlossen ist und von mehreren unabhängigen Kunden mit jeweils einer einem Kunden zugeordneten Gruppe von Teilnehmern unabgängig voneinander genutzt wird.

Telefonanlagen stellen den an Sie angeschlossenen Teilnehmern bzw. Endgeräten Leistungsmerkmale zur Verfügung. Große private Telekommunikationsanlagen (TK-Anlagen) erreichen heute Ausbaustufen von über 10.000 Teilnehmern. Werden diese Telekommunikationsanlagen vernetzt, z.B. über QSIG, so können Kommunikationssysteme entstehen, deren beherrschbare Teilnehmerzahl nur noch durch die maximal zulässige Länge der signalisierbaren Rufnummern begrenzt wird. Telekommunikationsanlagen dieser Größenordnungen bieten nicht nur ein breites Spektrum von vermittlungstechnischen Leistungsmerkmalen, welches die Möglichkeiten kleiner Telekommunikationssysteme bei Weitem übersteigt, sie bieten darüber hinaus Zugang zu serverbasierten Applikationen wie CTI (Computer Telephony Integration), CRM (Customer Relations Management) und Call Center.

Die Leistungsmerkmale der Telefonanlagen sind unterschiedlich aufwändig zu implementieren. Komplizierte vermittlungstechnische Leistungsmerkmale und serverbasierte Applikationen erfordern einen großen Realisierungsaufwand, der sich für kleinere Anschlusszahlen oft als unwirtschaftlich erweist, so dass derartige Leistungsmerkmale in kleinen Anlagen nicht oder nur selten zu finden sind. Es bestehen daher Ansätze, die Leistungsmerkmale großer TK-Anlagen für viele Kunden mit jeweils eigenen Teilnehmergruppen zentral bereitzustellen und so die Kosten der Leistungsmerkmale pro Teilnehmer in wirtschaftliche Bereiche zu führen. Zwei bekannte Ansätze dazu sind der Centrex Service im öffentliche Netz der Deutschen Telekom AG in Deutschland, sowie der "Multi-Company"-Ansatz im Bereich der privaten Telekommunikationsanlagen.

Bei dem Dienst Centrex werden typische Leistungsmerkmale privater Telefonanlagen vom Netzbetreiber für viele Kunden zentral bereitgestellt. Der Dienst benutzt Eigenschaften privater Telefonanlagen und Eigenschaften des öffentlichen Netzes. Die Netzwerkintelligenz, d.h. die Steuerung der Leistungsmerkmale ist im öffentlichen Netzwerk räumlich entfemt von dem Kunden und die Schnittstelle zwischen öffentlichem Netzwerk und privatem Netzwerk ist an einem virtuellen Ort mit der Funktion eines Gateways innerhalb des öffentlichen Netzes. Ein Centrex-Kunde erstellt einen Kunden-Rufnummernplan und wählt eine Auswahl von Leistungsmerkmalen, für die er zu zahlen bereit ist, und ein Centrex Administrator des Betreibers des öffentlichen Netzwerks implementiert den Kunden-Rufnummemplan und die ausgewählten Leistungsmerkmale, so dass sie für die Teilnehmer des Kunden zur Verfügung stehen. Der Centrex Dienst ist relativ teuer und die Kunden sind Firmen. Weder ein Administrator des Kunden noch ein Teilnehmer kann alle Leistungsmerkmale einrichten. Jedes Mal, wenn ein Teilnehmer eine Auswahl von Leistungsmerkmalen ändern will, ist dies aufwändig wegen der Einschaltung des zusätzlichen Centrex Administrators des Betreibers des öffentlichen Netzwerks als externe Dienstleistung eines Dritten. Solche aus einem öffentlichen Netzwerk gesteuerten Dienste umfassen zudem nicht besonders fortschrittliche Leistungsmerkmale großer Telefonanlagen zur Telefonie von Benutzergruppen.

Der Multi-Company Ansatz im Bereich privater Netze basiert auf einer Telefonanlage an einem einzelnen Ort. Dies wird auch als Campus-Lösung bezeichnet, da sich das private Netzwerk typischerweise über eine Campus-Fläche erstreckt. In einer großen Einrichtung wird das Kommunikationssystem des Gebäudes oder der Einrichtung betrieben durch einen Netzwerkbetreiber wie die Anmelderin oder wie die Regus-Corporation, UK. Die Netzwerk-Intelligenz ist in dem privaten Netzwerk auf dem Campus und der Übergang zum öffentlichen Netzwerk ist auch auf dem Campus. Rechtlich unabhängige Kunden oder Mandanten mieten typischerweise Büroraum in der Einrichtung und jeder Mandant wählt individuell eine Auswahl von Leistungsmerkmalen, für die er bereit ist zu zahlen, und ein Administrator des Netzwerkbetreibers der Einrichtung, der die Telefonanlage betreibt, implementiert die ausgewählten Leistungsmerkmale und stellt sie den Teilnehmern der Mandanten bereit. Der Dienst ist mittelmäßig teuer und die Kunden sind Firmen. Weder ein firmenzugehöriger Administrator noch ein Firmenteilnehmer kann die ausgewählten Leistungsmerkmale zur Bereitstellung implementieren. Jedes Mal, wenn ein Kunde eine Leistungsmerkmaländerung wünscht, ist dies aufwändig, da der Administrator des Betreibers der Telefonanlage als Dritter eingeschaltet werden muss. Ferner sind die privaten Telefonanlagen nicht konzipiert für eine derartige Benutzung, und daher ist es nicht möglich, alle möglichen Kombinationen von Leistungsmerkmalen für die einzelnen Mandanten individuell und simultan einzurichten. Daher bietet der Betreiber des Campus Netzwerkes Pakete von Leistungsmerkmalen an, die simultan eingerichtet und betrieben werden können. Bei einem bestehenden System ist die Anzahl der einrichtbaren Firmen auf 64 begrenzt und die Telefonanlage kennt den Begriff der Firma bzw. des Mandanten oder Kunden nicht. Dort erfolgt die vermittlungstechnische Abgrenzung der Kunden voneinander durch Anpassung bestehender Leistungsmerkmale, z.B. die Bildung von Verkehrsgruppen.

Da die Telefonanlagen nicht darauf ausgelegt sind, rechtlich unabhängige Mandanten völlig getrennt voneinander zu verwalten, fehlt eine mandantenbezogene Ressourcen-Verwaltung, eine mandantenbezogene Gebührenberechnung, ein mandantenbezogenes spezifisches Routing und eine mandantenbezogene Vernetzung. Außerdem fehlt ein mandantenbezogener Rufnummernplan, d.h. es ist nicht möglich, an Teilnehmer von mehreren Mandanten jeweils dieselben internen Rufnummern zu vergeben. Dies bedeutet beispielsweise, dass ein Mandant mit nur 9 Teilnehmern für diese 5-stellige Intemrufnummem benötigt. Außerdem ist die Systematik von Mandanten-Rufnummernbereichen stark eingeschränkt. Der Grund dafür ist, dass die Campus-Anlage einen Rufnummernbereich hat, z.B. 4711 10000 bis 4711 99999, den der Betreiber der Campus-Anlage auf seine Kunden verteilt. Ein Nachteil hierbei ist, dass nach mehreren Betriebsjahren mit vielen Kundenwechseln dieser Bereich beliebig zerstückelt ist, so dass einem neuen Kunden kein zusammenhängender Rufnummernbereich aus dem Vorrat zugewiesen kann. Ähnliches gilt auch für einen Kunden mit wachsenden Ansprüchen an die Teilnehmerzahl, da die an seinen Rufnummernabschnitt unmittelbar angrenzenden Bereiche vielleicht schon vergeben sind. Weitere Ansätze sind aus der EP-A-0 557 644 sowie aus dem Siemens Technik Report "Vermietung von Vermittlungsstellen ressourcen", Peter Mitterer et al, Bd. 3, Nr. 9, Oktober 2000, Seite 117, bekannt.

Es ist daher die Aufgabe der vorliegenden Erfindung, ein Kommunikationssystem und Kommunikationsdienste bereitzustellen, welche mandantenfähig sind, wobei Kunden mit jeweils eigenen Teilnehmern völlig unabhängig voneinander eingerichtet, bedient und verwaltet werden können.

Diese Aufgabe wird durch die Verfahren und eine Vorrichtung mit den Merkmalen der unabhängigen Patentansprüche gelöst. Bevorzugte Ausgestaltungen der Erfindung ergeben sich aus den abhängigen Ansprüchen.

Ein Kemgedanke der Erfindung ist es, virtuelle private Telekommunikationsanlagen mit jeweils einer eigenen Datenhaltung und einer eigenen Datenzugriffsstruktur bereitzustellen. Eine solche virtuelle Anlage kann jedem Kunden bzw. Mandanten zugeordnet werden, und damit sind dessen Teilnehmer unabhängig und organisatorisch getrennt von den Teilnehmern anderer Kunden. Erfindungsgemäß wird dieser Gedanke implementiert durch ein Kommunikationssystem mit einem kundenindividuell frei gestaltbaren durch den Kunden einrichtbaren Kunden-Rufnummernplan. Ein solches Kommunikationssystem kann auf der Basis einer privaten Teleltommunikationsanlage eine beliebige Anzahl von Kunden mit jeweils einer beliebigen Anzahl von Teilnehmern vorsehen. Innerhalb der virtuellen Anlage eines Kunden sind Leistungsmerkmale sowohl kundenweit als auch individuell für dessen Teilnehmer einrichtbar. Dies geschieht weitgehend durch einen Administrator des Kunden selber, z.B. die Vergabe von Teilnehmerberechtigungen, insbesondere im Zusammenhang mit Amtsverkehr oder bei der Nutzung von Leistungsmerkmalen. Die Einrichtung und Änderung von einigen Daten innerhalb der virtuellen Anlage bleibt dem Systemadministrator vorbehalten. Dies sind z.B. die Konfigurierung des Verkehrs zwischen virtuellen Anlagen verschiedener Kunden und das Freischalten und Sperren von Hardwareadressen.

Zum Sprachgebrauch sei angemerkt, dass im Bereich der Telefonierdienste "Kunde" und "Mandant" sich entsprechen, wobei deren jeweils mehreren Teilnehmern jeweils ein Endgerät entspricht, wobei es aus der Perspektive der Anlage eine eindeutige Teilnehmeranschlussleitung zur Identifikation des Endgeräts und somit des Teilnehmers gibt. In der Vermittlungstechnik ist es üblich, den Begriff Teilnehmer gleichwertig für das Endgerät zu verwenden.

Ein erfindungsgemäßes Verfahren zum Betrieb eines Kommunikationssystems, welches an ein öffentliches Netzwerk angeschlossen ist und von mehreren unabhängigen Kunden mit jeweils einer einem Kunden zugeordneten Gruppe von Teilnehmern unabhängig voneinander genutzt wird, mit einem kundenindividuell frei gestaltbaren Kunden-Rufnummernplan ermöglicht es, zunächst mittels eines Systemadministrators einen Kunden einzurichten und anschließend die Teilnehmer des Kunden durch den Kunden selbst einrichten zu lassen. Dies geschieht vorteilhaft durch einen als Kundenadministrator berechtigten Teilnehmer des Kunden, wobei dieser einen Kunden-Rufnummernplan etabliert.

Erfindungsgemäß ist weiterhin vorgesehen, dass kundenindividuelle Zugangs-Rufnummern bezüglich des öffentlichen Netzwerks eingerichtet werden. Dies ermöglicht ein "Umziehen" eines bestehenden Kunden, der bislang am öffentlichen Netz angeschlossen ist, auf einen Dienstleister, welcher ein Kommunikationssystem für viele Kunden betreibt. Der Kunde behält beim Umziehen seine Zugangs-Rufnummer bezüglich des öffentlichen Netzwerks. In Bezug auf die Verbindung des erfindungsgemäßen Kommunikationssystems mit dem öffentlichen Netzwerk ist es sogar möglich, eine Anzahl von Leitungen, dynamisch mit verschiedenen Zugangs-Rufnummern zu belegen. Dies spart Verbindungsleitungen zwischen dem öffentlichen Netz und dem Kommunikationssystem, wobei stochastische Lastspitzen einzelner Kunden mit Leitungskapazitätsreserven des Gesamtsystems aller Kunden ausgeglichen werden.

Erfindungsgemäß wird vorgeschlagen, dass jedem Kunden eine Kundenidentifikationsnummer zugeordnet ist. Vorzugsweise wird die Kundenidentifikationsnummer in einer Datenbank des Systems als Identifier für einen Datenbestand zu einem Kunden verwendet. Die Kundenidentifikationsnummer ermöglicht die kundenindividuelle Einrichtung virtueller Telefonanlagen. Ihre Nutzung als Identifier ermöglicht, dass Datenbanken so geändert werden, dass mit der Kundenidentifikationsnummer als Schlüssel auf einen kundenspezifischen Teil der Datenbank zugegriffen werden kann. Es erlaubt weiterhin eine Vervielfältigung der Kundendaten derart, dass mit dem Identifier Bereiche der verschiedenen Kunden identifiziert werden und dass Kundendatensätze vervielfältigt werden, wobei die Kundendatensätze völlig unabhängig voneinander sind.

Weitere vorteilhafte Ausführungsformen ergeben sich aus den weiteren Unteransprüchen und aus der nachfolgenden Beschreibung eines bevorzugten Ausführungsbeispiels, das anhand der Abbildungen näher erläutert wird. Hierbei zeigen:
FIG. 1 eine schematische Darstellung eines Telekommunikationssystems gemäß der Erfindung;
FIG. 2 schematische Darstellung von Zugriffen einer Vermittlungssoftware auf eine Datenbank eines Telekommunikationssystems gemäß der Erfindung;
FIG. 3 ein Ablaufdiagramm eines Verfahrens zum Betrieb eines Telekommunikationssystems gemäß der Erfindung; und
FIG. 4 ein Ablaufdiagramm eines alternativen Zweigs im Verfahren zum Betrieb eines Telekommunikationssystems gemäß der Erfindung nach FIG. 3.

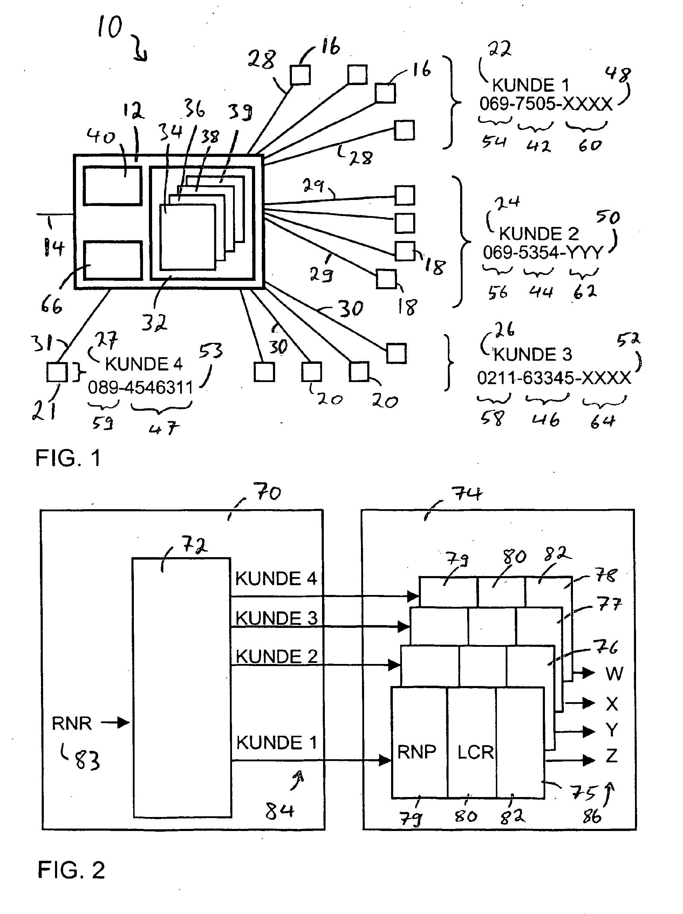

FIG. 1 zeigt schematisch ein erfindungsgemäßes Kommunikationssystem 10 mit einer zentralen Kommunikationsanlage 12, die über eine Leitung 14 an ein öffentliches Netz angeschlossen ist. An die Kommunikationsanlage 12 sind Endgeräte 16, 18, 20, 21, die Teilnehmer verschiedener Kunden 22, 24, 26, 27 repräsentieren, über Leitungen 28, 29, 30, 31 angeschlossen. Die Endgeräte 16, 18, 20, 21 sind beliebige in einem Telekommunikationsnetz betreibbare Endgeräte wie analoges Telefon, ISDN-Telefon, Systemtelefon, IP-Telefon, Faxgerät, Anrufbeantworter. Zur Verwaltung der voneinander völlig unabhängigen Kunden 22, 24, 26, 27 weist die Kommunikationsanlage 12 eine Einrichtung 32 zur Bereitstellung eines kundenindividuell frei gestaltbaren Rufnummernplans auf. Diese Einrichtung zur Bereitstellung des Rufnummernplans 32 basiert auf einer privaten Telefonanlage und ist zur Trennung von den verschiedenen Kunden zugeordneten Datenbereichen eingerichtet. Aufgrund der Trennung der verschiedenen Datenbereiche wirkt die Einrichtung zur Bereitstellung des Rufnummernplans 32 als jeweils eine virtuelle private Telefonanlage 34, 36, 38, 39 für jeden der Kunden 22, 24, 26, 27.

Die Endgeräte 16, 18, 20, 21 beziehungsweise Teilnehmer verschiedener Kunden 22, 24, 26, 27 bilden jeweils eine Gruppe von Teilnehmern des jeweiligen Kunden, wobei die Kunden beziehungsweise deren Gruppen das Kommunikationssystem 10 unabgängig voneinander nutzen mit einem kundenindividuell frei gestaltbaren durch den Kunden einrichtbaren Kunden-Rufnummernplan.

Die zentrale Kommunikationsanlage 12 weist weiterhin eine Einrichtung 40 zum Einrichten einer kundenindividuellen Zugangsrufnummer gemäß E.164 bezüglich des öffentlichen Netzwerkes aus, unter der der Kunde über das öffentliche Netz anwählbar ist. Die Wahl ist die Übermittlung der eindeutigen E.164 Rufnummer. Eine weltweit eindeutige Rufnummer 48, 50, 52, 53 besteht gemäß E.164 aus einer Zugangs-Rufnummer eines Kunden bezüglich des öffentlichen Netzes und gegebenenfalls einer Teilnehmemummer 60, 62, 64. Die Zugangs-Rufnummer bezüglich des öffentlichen Netzes besteht aus der Rufnummer des Kunden 42, 44, 46, 47 im jeweiligen Ortsnetz und gegebenenfalls zusätzlichen Rufnummern 54, 56, 58, 59 für das Ortsnetz und gegebenenfalls das Land des Kunden, um innerhalb des öffentlichen Netzes Eindeutigkeit zu erzielen. Der Kunde 4 weist die Besonderheit auf, dass dieser Kunde 4 nur ein Endgerät 21 betreibt, und daher die Rufnummer 53 des Kunden 4 mit der Zugangs-Rufnummer bezüglich des öffentlichen Netzes 59+47 identisch ist. In diesem Fall ist keine Unterscheidung von Teilnehmern des Kunden notwendig. Bei Kunden mit mehreren Teilnehmern wie 22, 24, 26 werden die Teilnehmer identifiziert durch Teilnehmernummern 60, 62, 64.

Die Einrichtung 40 ermöglicht es, dass jeder Kunde 22, 24, 26, 27 eine eigene, von den anderen völlig unabhängige Rufnummer 42, 44, 46, 47 bezüglich des öffentlichen Netzes aufweist. Diese Rufnummer bezüglich des öffentlichen Netzes ist unabhängig von der Anzahl und Art der Leitungen 14, mit denen das Kommunikationssystem 10 mit dem öffentlichen Netz verbunden ist. Zur Vereinfachung der Darstellung sind als Kennung bezüglich des öffentlichen Netzes nur nationale Kennziffern von Ortsknoten im Fernwahlnetz der Deutschen Telekom AG 54, 56, 58, 59 angegeben. Die Nummern innerhalb des kundeneigenen Rufnummemplans sind kundenindividuell vergeben, wobei identische oder teilidentische Rufnummernblöcke, gegebenenfalls unterschiedlicher Länge, d.h. Ziffernzahl, innerhalb derselben physikalischen Kommunikationsanlage 12 vergebbar sind. So hat der Kunde 24 einen Rufnummernplan mit 3-stelligen Rufnummern 62. Die Kunden 22 und 26 haben großenteils identische Rufnummernpläne mit 4-stelligen Rufnummern 60 und 64. Innerhalb der Kommunikationsanlage 12 sind Bereiche mit Kundendaten für verschiedene Kunden voneinander getrennt durch eine Kundenidentifikationsnummer KID gespeichert. Anhand dieser Kundenidentifikationsnummer werden die Kunden unterschieden, so dass unter Hinzunahme der Kundenidentifikationsnummer als Identifier teilidentische Kundenrufnummernpläne wiederum eindeutig werden. Die Kommunikafionsanlage 12 weist weiterhin eine Einrichtung 66 zur Analyse und Zuordnung von Rufnummern auf. Diese Einrichtung 66 dient der Ermittlung der Kundenidentifikationsnummer aus einer Rufnummer eines eingehenden Rufs. Diese Rufnummer ist weltweit eindeutig und wird bei einem ankommenden Ruf von dem öffentlichen Netzwerk als Ziel-Rufnummer mit übertragen. Die Einrichtung 66 wirkt weiterhin als Einrichtung zur Ermittlung einer Hardware-Adresse des Zielendgeräts aus der weltweit eindeutigen Rufnummer mittels der Kundenidentifikationsnummer bei einem Ruf aus externer Quelle. Nachdem die Einrichtung 66 die Rufnummer analysiert hat und die Kundenidentifikationsnummer bestimmt hat, kann sie über die Einrichtung zur Bereitstellung des Rufnummernplans 32 auf den zur Kundenidentifikationsnummer gehörenden Rufnummerplan zugreifen und anhand der Teilnehmernummer 60, 62, 64 die Hardware-Adresse des gewünschten Teilnehmeranschlusses herausfinden und die Kommunikationsanlage 12 kann den eingehenden Ruf zu dem gewünschten Teilnehmer vermitteln. Die Einrichtung zur Analyse und Zuordnung 66 wirkt bei einem Ruf aus interner Quelle als eine Einrichtung zur Ermittlung einer Kundenidentifikationsnummer aus der Hardwareadresse des rufenden Teilnehmers. Wenn die Kundenidentifikationsnummer des rufenden Teilnehmers, und damit der Kunde zu dem der Teilnehmer gehört, bekannt ist, kann die gewählte Nummer entsprechend der Regeln, die dieser Kunde aufgestellt hat, analysiert werden und das Gespräch nach intern oder extern vermittelt werden.

FIG. 2 zeigt schematisch das Zusammenwirken einer Vermittlungssoftware (Call Control) und der Datenhaltung in einem Kommunikationssystem gemäß der Erfindung. Der hier beschriebene Teil der Vermittlungssoftware betrifft die Analyse und Zuordnung von Rufnummern und den Rufnummernplan und damit die Einrichtungen 66 und 32 aus FIG. 1. Die Datenablage betrifft entsprechend den Rufnummernplan und die kundengetrennte Datenablage entsprechend der virtuellen Telekommunikationsanlagen 34, 36, 38, 39 in FIG. 1.

Innerhalb der Vermittlungssoftware 70 greift eine Dispatcher-Software 72 auf eine Datenbank 74 zu. In der Datenbank 74 sind die zu den Kunden gehörenden Daten getrennt voneinander und durch die Kundenidentifikationsnummer identifizierbar abgelegt, jeweils in Bereichen 75, 76, 77, 78. Jeder der Kundenbereiche 75, 76, 77, 78 enthält den entsprechenden Rufnummerplan 79 mit einem Verweis auf die Hardwareadresse(n) der Teilnehmerleitungen, ein kundenindividuelles Least-Cost-Routing (LCR) 80 und weitere kundenspezifische Daten 82. Die Arbeitsweise der Dispatcher-Software 72 wird am Beispiel eines eingehenden Rufes aus externer Quelle beschrieben. Die eingehende Ziel-Rufnummer 83 wird vom Dispatcher 72 analysiert und die Kundenidentifikationsnummer ermittelt. Anhand dieser Kundenidentifikationsnummer 84 wird nun auf die Datenbank 74 zugegriffen, und zwar nur auf den entsprechenden der Bereiche 75, 76, 77, 78. Bei diesem Zugriff wird aus dem Teilnehmerabschnitt der ankommenden Rufnummer 83, in FIG. 1 mit 60, 62, 64 bezeichnet, und der Kundenidentifikationsnummer 84 aus dem Rufnummemplan 79 der entsprechende Teilnehmer ermittelt und die zugehörige Adresse der Teilnehmeranschlussleitung in 80 ermittelt und als Hardwareadresse 86 ausgegeben. Im Fall des Kunden 4 in FIG. 1 mit nur einem Endgerät 21 ist der einzige Teilnehmer bereits eindeutig identifiziert und es wird lediglich die zugehörige Adresse der Teilnehmeranschlussleitung in 80 ermittelt und als Hardwareadresse 86 ausgegeben. Damit kann ein anderer Teil der Vermittlungssoftware 70 den ankommenden Ruf zu dem gewünschten Teilnehmer verbinden und diese Verbindung besteht bis einer der Gesprächsteilnehmer das Gespräch beendet.

Bei einem Anruf aus interner Quelle ermittelt der Dispatcher 72 mit Hilfe der Datenbank aus der Leitungsadresse des rufenden Teilnehmers die Kundenidentifikationsnummer und damit den Kunden und analysiert daraufhin die gewählte Rufnummer und ermittelt, ob es sich um einen internen oder externen Anruf handelt. Von der Datenhaltung und Vermittlungstechnik her gelten alle Anrufe zu anderen Kunden und nach außerhalb als externe Anrufe. Ein anderer Teil der Vermittlungssoftware 70 kann nun mit den analysierten Rufnummerndaten die Verbindung entweder nach extern oder zu einem anderen Teilnehmer desselben Kunden hin herstellen.

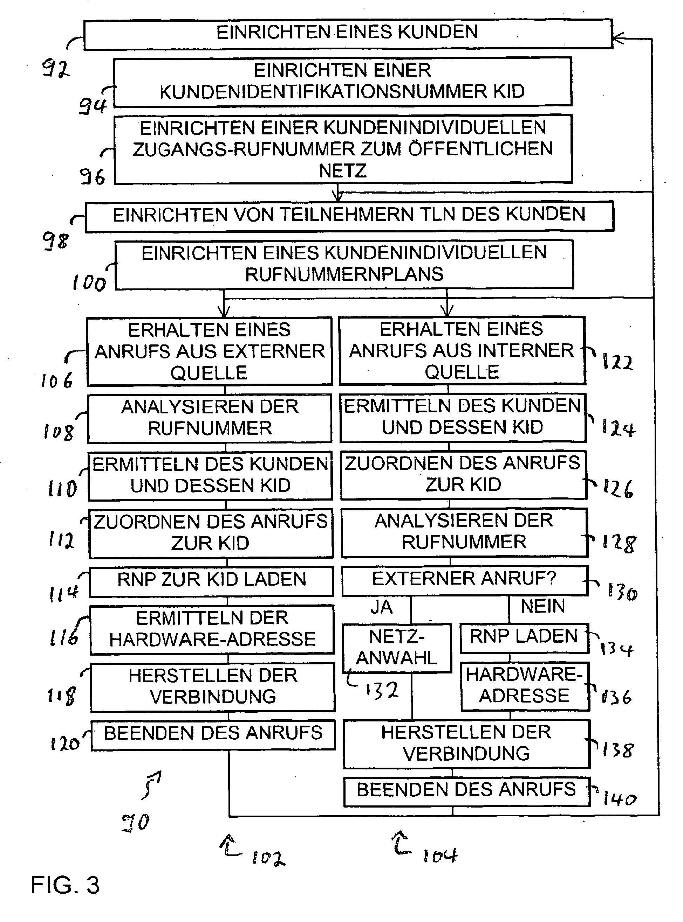

FIG. 3 zeigt in Flussdiagramm 90 ein Verfahren zum Betrieb eines Telekommunikationssystems gemäß der Erfindung. Das Verfahren beginnt mit Verfahrensschritt 92, Einrichten eines Kunden durch einen Systemadministrator, mit den Unterschritten 94 Einrichten einer Kundenidentifikationsnummer KID, und Unterschritt 96, Einrichten einer kundenindividuellen Zugangs-Rufnummer zum öffentlichen Netz. Mit diesem Verfahrensabschnitt ist die Einrichtung des Kunden durch den Systemadministrator abgeschlossen und gemäß der Erfindung ist damit der Administrationsanteil des Systemadministrators abgeschlossen.

Nun folgt in Verfahrensschritt 98 das Einrichten von Teilnehmern (Tln) des Kunden durch einen Kunden-Administrator. Dieser Administrator im Bereich des Kunden richtet im Verfahrensschritt 100 einen kundenindividuellen Rufnummernplan des Kunden ein. Damit ist die Einrichtung der dem Kunden zugeordneten Teilnehmer abgeschlossen und es kann telefoniert werden.

Das Telefonieren erfolgt in zwei Zweigen, nämlich in Zweig 102 für einen Anruf aus externer Quelle und in Zweig 104 für einen Anruf aus interner Quelle. Ein Anruf aus externer Quelle hat die Besonderheit, dass er auf einer Amtsleitung ankommt, wobei Amtsleitungen von allen Kunden gemeinschaftlich genutzt werden. Somit kann deren Hardware keinem Kunden zugeordnet werden. Bei einem Anruf aus interner Quelle ist im Unterschied dazu der die Verbindung aufbauende Anschluss eine Teilnehmereinrichtung der Anlage, z. B. eine Teilnehmeranschlussleitung. Jede Teilnehmereinrichtung ist über deren Hardwaredaten einem Kunden zugeordnet. Anrufe aus interner und aus externer Quelle werden unterschiedlich behandelt. Bei einem Anruf aus interner Quelle kann die KID aus den Hardwaredaten des Anschlusses, der die Verbindung aufbauenden Teilnehmereinrichtung, genommen werden, da ein Anschluss eindeutig einem Kunden zugeordnet ist. Bei einem Anruf aus externer Quelle dagegen erfolgt die Ermittlung der KID aus der Zielrufnummer.

Eine Besonderheit stellt der Verkehr von Kunde zu Kunde dar, der normalerweise als Externverkehr über ein öffentliches Netz erfolgt, da in der gewählten Rufnummer Anwahl-Kennziffern eines öffentlichen Netzes enthalten sind. In diesem Fall liegt sowohl ein Anruf aus interner Quelle in das öffentliche Netz als auch ein Anruf aus externer Quelle vom öffentlichen Netz vor aus Sicht der beteiligten virtuellen Anlagen. Es ist jedoch auch möglich, dass der Systemadministrator ein LCR oder ein besonderes Routing von einer virtuellen Anlage zu einer anderen virtuellen Anlage etwa mittels Zugangs-Rufnummern bezüglich dem öffentlichen Netzwerk einrichtet und diese Gespräche innerhalb der realen Anlage vermittelt werden.

In Schritt 106 erhält die zentrale Kommunikationsanlage, Kommunikationsanlage 12 in FIG. 1, einen Anruf aus externer Quelle. In Schritt 108 wird die mit dem Ruf übermittelte Ziel-Rufnummer analysiert. In Schritt 110 wird der gerufene Kunde und dessen KID ermittelt. Anschließend erfolgt in Schritt 112 die Zuordnung des Anrufs in KID. In Schritt 114 wird der zur KID gehörende Rufnummernplan (RNP) geladen.. Mit dem RNP wird in Schritt 116 die Hardwareadresse des Zielteilnehmers ermittelt. Mit der Hardware-adresse wird in Schritt 118 die Verbindung des Anrufs aus externer Quelle zum gewünschten Teilnehmer hergestellt. Die Verbindung besteht, bis in Schritt 120 der Anruf beendet wird durch einen der beiden Teilnehmer. Einen Sonderfall stellt ein Anruf aus externer Quelle in Einzelwahl dar. Die KID muss aus der Wahlinformation abgeleitet werden. Die Wahlinformation ist aber mit Transaktionsbeginn unvollständig. Daher wird gewartet, bis eine hinreichende Wahlinformation vorliegt um die korrekte Kundenidentifikationsnummer zu ermitteln und spezifische Daten von dem Datenbanksystem anzufordern.

In Schritt 122 in Zweig 104 wird in der Kommunikationsanlage 12 in FIG. 1 ein Anruf aus interner Quelle erhalten. Die Adresse der Teilnehmeranschlussleitung des rufenden Teilnehmers ist bekannt und somit ist auch der rufende Teilnehmer bekannt. Nun wird in Schritt 124 der dem Teilnehmer zugeordnete Kunde und dessen Kundenidentifikationsnummer KID ermittelt. In Schritt 126 wird eine Zuordnung des Anrufs zur KID vorgenommen. Anschließend wird in Schritt 128 die gewählte Rufnummer analysiert entsprechend der kundeneigenen Regeln und in Schritt 130 wird bestimmt, ob es sich um einen Anruf mit externem Ziel handelt. Falls ja, so erfolgt in Schritt 132 eine entsprechende Netzanwahl, über die die Verbindung des Anrufs aus interner Quelle - in dieser Verzweigung zum gewünschten externen Teilnehmer - in Schritt 138 hergestellt wird. Falls es sich nicht um einen Anruf mit externem Ziel handelt, also das Ziel wiederum ein Teilnehmer desselben Kunden ist, so wird in Schritt 134 der zur in Schritt 124 ermittelten KID gehörende Rufnummernplan geladen. Mit dem RNP wird in Schritt 136 die Hardwareadresse des Zielteilnehmers ermittelt. Mit der Hardwareadresse wird die Verbindung des Anrufs aus interner Quelle - in dieser Verzweigung zum gewünschten internen Teilnehmer - in Schritt 138 hergestellt. Die Verbindung bleibt bestehen, bis einer der Teilnehmer sie in Schritt 140 beendet.

Nach Beenden des Anrufs, also nach Schritt 120, bzw. nach Schritt 136 verzweigt das erfindungsgemäße Verfahren je nach Situation entweder zum Einrichten eines neuen Kunden in Schritt 92 zum Einrichten von neuen Teilnehmern eines bestehenden Kunden beziehungsweise dem Einrichten von Änderungen im Teilnehmerdatenbestand in Schritt 98 oder zum Erhalten eines weiteren Anrufs gemäß Schritt 106 oder Schritt 122. In leistungsfähigen Kommunikationsanlagen 12 läuft das erfindungsgemäße Verfahren vielfach unabhängig voneinander parallel ab, so dass nicht nur gleichzeitig viele Teilnehmer telefonieren, sondern auch viele Administratoren Einrichtungen in den Kundendaten vornehmen.

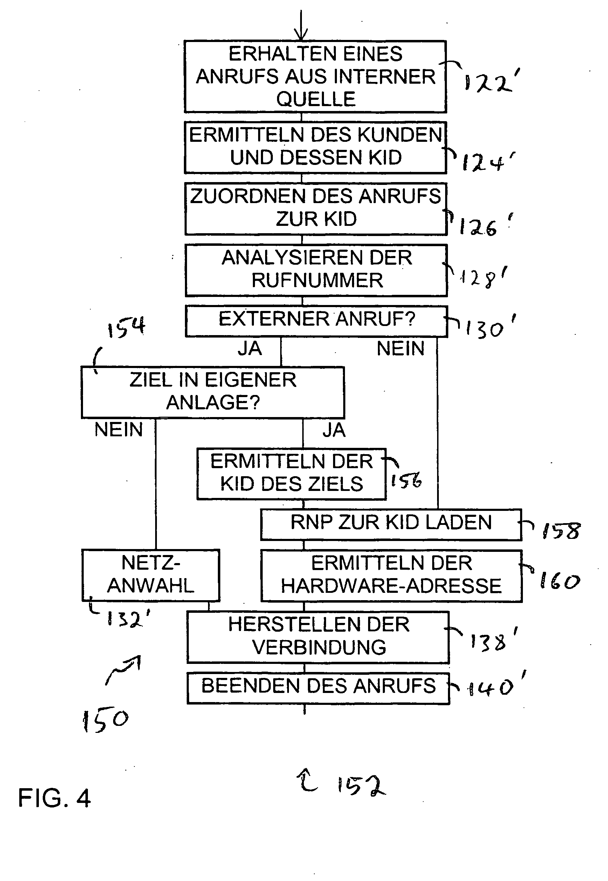

FIG. 4 zeigt ein Ablaufdiagramm 150 eines Zweigs 152 im Verfahren zum Betrieb eines Telekommunikationssystems gemäß der Erfindung alternativ zum Zweig 104 in FIG. 3. Entsprechende Schritte erhalten die gleichen Bezugsziffern gestrichen. Diese alternative Ausführungsform des Verfahrens gemäß der Erfindung berücksichtigt den Fall, dass für den Verkehr von Kunde zu Kunde der Systemadministrator ein Routing von einer virtuellen Anlage zu einer anderen virtuellen Anlage einrichtet und diese Gespräche innerhalb der realen Anlage vermittelt werden.

In Schritt 122' in Zweig 152 wird in der Kommunikationsanlage 12 in FIG. 1 ein Anruf aus interner Quelle erhalten. Die Adresse der Teilnehmeranschlussleitung des rufenden Teilnehmers ist bekannt und somit ist auch der rufende Teilnehmer bekannt. Nun wird in Schritt 124' der dem Teilnehmer zugeordnete Kunde und dessen Kundenidentifikationsnummer KID ermittelt. In Schritt 126' wird eine Zuordnung des Anrufs zur KID vorgenommen. Anschließend wird in Schritt 128' die gewählte Rufnummer analysiert entsprechend der kundeneigenen Regeln und in Schritt 130' wird bestimmt, ob es sich um einen Anruf mit externem Ziel handelt.

Falls ja nach Schritt 130', so erfolgt in Schritt 154 nun eine weitere Abfrage, ob das Ziel des Rufs in der Kommunikationsanlage 12 liegt.

Falls ja nach Schritt 154, so liegt ein Verkehr von Kunde zu Kunde vor, und in Schritt 156 wird die KID des Kunden zum gerufenen Teilnehmer aus der Ziel-Rufnummer ermittelt. Zu dieser in Schritt 156 ermittelten KID wird in Schritt 158 der dazu gehörende Rufnummemplan geladen. Mit dem RNP wird in Schritt 160 die Hardwareadresse des Zielteilnehmers ermittelt. Mit der Hardwareadresse wird die Verbindung des Anrufs von Kunde zu Kunde in Schritt 138' hergestellt. Die Verbindung bleibt bestehen, bis einer der Teilnehmer sie in Schritt 140' beendet.

Falls nein nach Schritt 154, so liegt ein Verkehr zu einem, Ziel außerhalb der Kommunikationsanlage 12 vor, und in Schritt 132' erfolgt eine entsprechende Netzanwahl, über die die Verbindung des Anrufs - in dieser Verzweigung zum gewünschten externen Teilnehmer - in Schritt 138' hergestellt wird.

Falls es sich in Schritt 130' nicht um einen Anruf mit externem Ziel handelt, also das Ziel wiederum ein Teilnehmer desselben Kunden ist, so wird in Schritt 158 der zur in Schritt 124' ermittelten KID gehörende Rufnummernplan geladen. Mit dem RNP wird in Schritt 160 die Hardwareadresse des Zielteilnehmers ermittelt. Mit der Hardwareadresse wird die Verbindung des Anrufs - in dieser Verzweigung zum gewünschten internen Teilnehmer - in Schritt 138' hergestellt. Die Verbindung bleibt bestehen, bis einer der Teilnehmer sie in Schritt 140' beendet.

Ein Aspekt der Erfindung ist, dass die Vermittlungstechnik eine Form der Prozessrechentechnik darstellt. Jede Verbindung zwischen Teilnehmern stellt einen eigenständigen Prozess innerhalb der Software der TK-Anlage nach dem Stand der Technik dar, und ist somit eine Instanz der Vermittlungstask. Die Parameter, die eine solche Instanz identifizieren, sind die Hardwareadresse HWA der Baugruppe, die an einem vermittlungstechnischen Vorgang beteiligt ist und eine Transaktionsnummer TAN, da jede Baugruppe an mehreren Transaktionen gleichzeitig beteiligt sein kann. Anstatt der Hardwareadresse kann auch eine virtuelle Hardwareadresse zur Anwendung kommen, die keinem realen Steckplatz mit einer realen HWA zugeordnet werden kann, hinter der sich aber ein Endgeräteanschluss verbirgt. Ein Beispiel hierfür wäre ein Anschluss eines IP-Phones, welches über ein LAN angeschlossen ist, mittels Internet Protokoll. Zu jeder dieser Instanzen existieren Speicher, die von einem zentralen Datenbanksystem verwaltet werden. Der Zugriff auf diese Speicher erfolgt nur über Schnittstellen des Datenbanksystems unter Angabe der Instanzparameter HWA und TAN. Erfindungsgemäß wird ein weiterer Instanzparameter definiert, die Kundenidentifikationsnummer KID.

Sowohl eine TK-Anlage nach dem Stand der Technik als auch eine erfindungsgemäße Kommunikationsanlage wird über Verwaltungstasken administriert. Einrichtungen erfolgen üblicherweise entweder für eine spezielle HWA oder für die gesamte Anlage und damit für alle HWA. Auch die Einrichtdaten werden von dem obenerwähnten Datenbanksystem verwaltet, d.h. jedes Ändern, Erweitem, Löschen oder Anzeigen von Einrichtdaten resultiert in Zugriffen auf Schnittstellen des Datenbanksystems. Gelten Daten nur für ein bestimmtes Gerät, so müssen HWA oder interne Rufnummer angegeben werden. In diesem Zusammenhang wird bei der erfindungsgemäßen Kommunikationsanlage die Kundenidentifikationsnummer dem Datenbanksystem mitgeteilt.

Im Detail muss für das erfindungsgemäße Verfahren jedes Endgerät und jeder vermittlungstechnische Vorgang eindeutig einem Kunden zugeordnet werden können. In der Vermittlungstechnik stellt die Rufnummer des Endgeräts ein grundlegendes Datum zur Identifizierung dar unter Nutzung des internationalen Rufnummernplans E.164, der jedes Endgerät weltweit eindeutig identifizierbar macht.

Nach dem Stand der Technik bei privaten Telekommunikationsanlagen war ein Endgerät mit seiner internen Rufnummer innerhalb der TK-Anlage eindeutig identifizierbar. Erfindungsgemäß ist dies nun nicht mehr so, da bei der Aufteilung der zentralen Kommunikationsanlage 12 in mehrere virtuelle TK-Anlagen 34, 36, 38, 39 in FIG. 1 diese Rufnummer von mehreren Kunden vergeben sein kann. Daher wird jedes Endgerät erfindungsgemäß unter der Rufnummer verwaltet, die im Rufnummerplan E.164 zugewiesen ist. Wenn ein Endgerät eine Verbindung anfordert, so kann seine Rufnummer aus seinen Konfigurationsdaten ausgelesen werden. Alternativ kann bei ISDN-Terminals die vom Endgerät in der Meldung Setup mitgelieferte Calling-Party-Number verwendet werden. Bei eingehenden Amtsanrufen wird die Rufnummer des Zielgeräts aus der Wahlinformation gewonnen. Bei DSS1-Leitungen ist diese Rufnummer im Informationselement Called-Party-Number enthalten. Erfindungsgemäß wird die Kundenidentifikationsnummer aus der Rufnummer des gerufenen Endgeräts abgeleitet. Die Kundenidentifikationsnummer ist softwaremäßig ein Identifier, vorteilhaft von der Struktur her ein Integer-Zahlenwert.

Die Erfindung hat den Vorteil, dass die zentrale Kommunikationsanlage 12 in FIG. 1 auf der Basis einer privaten Telekommunikationsanlage geschaffen werden kann. Ein besonderer Vorteil dabei ist, dass die hochkomplexe Vermittlungssoftware einer privaten TK-Anlage dabei nahezu unverändert bleibt. Lediglich Mechanismen zur Berechnung der Kundenidentifikationsnummer, also des zusätzlichen Identifiers, werden benötigt. Diese Aufgabe übernimmt die Einrichtung zur Analyse und Zuordnung von Rufnummern 66 in FIG. 1 als sogenannter Dispatcher, der aus Rufnummern eine Kundenidentifikationsnummer ermittelt. Der Dispatcher steuert die Zugriffe auf das Datenbanksystem und übermittelt die zugeordneten Daten an die Vermittlungstechnik. Das Datenbanksystem ist erfindungsgemäß in der Lage, Speicherstrukturen kundenbezogen zu verwalten. Nach einer besonders vorteilhaften Ausgestaltung der Erfindung können das die kompletten bestehenden Speicherstrukturen einer privaten Telekommunikationsanlage sein, wobei dieser komplette Datensatz für jeden Kunden eingerichtet wird. Derartige kundenspezifische Datensätze 75, 76, 77, 78 sind in FIG. 2 dargestellt. Mit Hilfe der Kundenidentifikationsnummer greift die Vermittlungssoftware 70 kundenspezifisch auf diese Datenbank zu. Die kundenspezifische Ablage von Rufnummernplänen hat folgende Eigenschaften: Die Länge der kundeninternen Rufnummern sind kundenindividuell, d.h. 0 bis X-stellige Rufnummernpläne können gleichzeitig auf einer TK-Anlage eingerichtet werden. Ein 0-stelliger Rufnummernplan wie im Fall des Kunden 4 in FIG. 1 ist ein Rufnummernplan, der für eine Rufnummer mit Null Ziffern die Hardwareadresse des einzigen für diesen Kunden angeschaltete Endgeräts zurückgibt.

Für Teilnehmer eines Kunden sind Endgeräte fremder Kunden logisch nicht existent, da sie nicht im Rufnummernplan des eigenen Kunden abliegen. Endgeräte innerhalb des eigenen Kunden können mit der eigenen internen Rufnummer angewählt werden. Dabei werden vorteilhafterweise nur die internen Rufnummern im Apparatedisplay zur Anzeige gebracht.

Die Amtsleitungen der TK-Anlage werden vorteilhaft von allen Kunden gemeinsam genutzt. Die DSS1-Leitungen können mit unterschiedlichen Kundenrufnummern benutzt werden, so dass diese Nutzung dynamisch ist und insgesamt weniger Leitungen als Leistungsspitzenreserve bereitgehalten werden müssen.

Eine weitere vorteilhafte Ausgestaltung ist die Einführung eines Default-Kunden. Unter dem Identifer des Default-Kunden, also dessen Kundenidentifikationsnummer können im Datenbanksystem Standarddaten abgelegt werden, es können anlagenweit gültige Daten abgelegt werden und er kann bei Einzelwahl bis zur Vollständigkeit der Wahlinformation verwendet werden.

Die Ausführung der Erfindung ist nicht auf das beschriebene Beispiel und die oben hervorgehobenen Aspekte beschränkt, sondern im Rahmen der Ansprüche ebenso in einer Vielzahl von Abhandlungen möglich, die im Rahmen fachgemäßen Handelns liegen.

### Bezugszeichenliste

Kommunikationssystem 10
Kommunikationsanlage 12
Leitung 14
Endgeräte / Teilnehmer 16, 18, 20, 21
Kunden 22, 24, 26, 27
Leitungen 28, 29, 30, 31
Einrichtung 32 zur Bereitstellung RNP
Datenbereiche / virtuelle private Telefonanlage 34, 36, 38, 39
Einrichtung 40 zum Einrichten einer Zugangsrufnummer
Rufnummer 42, 44, 46, 47 im jeweiligen Ortsnetz
Rufnummer E.164 48, 50, 52, 53
Rufnummern 54, 56, 58, 59 für das Ortsnetz
Teilnehmernummern 60, 62, 64
Einrichtung 66 zur Analyse und Zuordnung
Vermittlungssoftware 70
Dispatcher-Software 72
Datenbank 74
Kundenbereiche 75, 76, 77, 78
entsprechenden Rufnummerplan 79
LCR 80
kundenspezifische Daten 82
Ziel-Rufnummer 83
Kundenidentifikationsnummer 84
Hardwareadresse 86
Flussdiagramm 90
92, Einrichten eines Kunden
94 Einrichten einer Kundenidentifikationsnummer
96, Einrichten einer kundenindividuellen Zugangs-Rufnummer
98 Einrichten von Teilnehmern
100 Einrichten kundenindividueller Rufnummernplan
Zweig 102
Zweig 104
106 Anruf aus externer Quelle
108 Ziel-Rufnummer analysieren
110 KID ermitteln
112 Zuordnung des Anrufs in KID
114 laden RNP
116 Hardwareadresse des Zielteilnehmers ermitteln
118 Verbindung herstellen
120 Anruf beenden
122 in Zweig 104 Anruf aus interner Quelle
124 KID ermitteln
126 Zuordnung des Anrufs zur KID
128 Rufnummer analysieren
130 Anruf mit externem Ziel?
132 Netzanwahl
138 Verbindung herstellen
140 Verbindung beenden
Ablaufdiagramm 150
Zweig 152
154 Ziel des Rufs in der Kommunikationsanlage?
156 KID des Kunden zum gerufenen Teilnehmer ermitteln
158 Rufnummernplan laden
160 Hardwareadresse ermitteln

## Patentansprüche

1. Verfahren (90) zum Betrieb eines Kommunikationssystems (12), welches an ein öffentliches Netzwerk angeschlossen ist und von mehreren unabhängigen Kunden (22, 24, 26, 27) mit jeweils einer einem Kunden zugeordneten Gruppe von Teilnehmern (16, 18, 20, 21) mit einem kundenindividuell frei gestaltbaren Kunden-Rufnummernplan unabhängig voneinander genutzt wird, **dadurch gekennzeichnet, dass** den Kunden jeweils eine virtuelle private Telekommunikationsanlage mit einer eigenen Datenhaltung und einer eigenen Datenzugriffsstruktur bereitgestellt wird; dass Amtsleitungen von allen Kunden gemeinschaftlich genutzt und dynamisch mit verschiedenen Zugangs-Rufnummern belegt werden; und
dass der Kunde für die ihm zugeordnete Gruppe von Teilnehmern den Kunden-Rufnummernplan sowie Leistungsmerkmale einrichtet.

2. Verfahren nach Anspruch 1, mit den Verfahrensschritten
Einrichten (92) eines Kunden durch einen Systemadministrator; und
Einrichten (98) eines Kunden-Rufnummernplans für die dem Kunden zugeordnete Gruppe von Teilnehmern (16, 18, 20, 21)durch einen dieser Teilnehmer.

3. Verfahren nach Anspruch 1 oder 2, wobei kundenindividuelle Zugangs-Rufnummern bezüglich des öffentlichen Netzwerks eingerichtet werden.

4. Verfahren nach einem der Ansprüche 1 bis 3, wobei jedem Kunden eine Kundenidentifikationsnummer (84) zugeordnet ist.

5. Verfahren nach Anspruch 4, wobei bei Ruf aus externer Quelle aus einer weltweit eindeutigen Rufnummer des gerufenen Teilnehmers die Kundenidentifikationsnummer (84) ermittelt wird.

6. Verfahren nach Anspruch 5, wobei bei Ruf aus externer Quelle aus der weltweit eindeutigen Rufnummer des gerufenen Teilnehmers mittels der Kundenidentifikationsnummer (84) eine Hardwareadresse ermittelt wird (102, 108 bis 116).

7. Verfahren nach einem der Ansprüche 4 bis 6, wobei in einer Datenbank des Systems die Kundenidentifikationsnummer (84) als Identifier für einen Datenbestand zu einem Kunden verwendet wird.

8. Verfahren nach einem der vorhergehenden Ansprüche, wobei bei Ruf aus interner Quelle aus einer Hardwareadressse des rufenden Teilnehmers eine Kundenidentifikationsnummer (84) ermittelt wird (104, 124; 152, 124').

9. Kommunikationsanlage (12), welche an ein öffentliches Netzwerk angeschlossen ist und von mehreren unabhängigen Kunden (22, 24, 26, 27) mit jeweils einer einem Kunden zugeordneten Gruppe von Teilnehmern (16, 18, 20, 21) mit einem kundenindividuell frei gestaltbaren Kunden-Rufnummernplan unabhängig voneinander genutzt wird, **gekennzeichnet durch** eine Einrichtung (32) zur Bereitstellung
- von virtuellen privaten Telekommunikationsanlagen mit einer eigenen Datenhaltung und einer eigenen Datenzugriffsstruktur;
- von Amtsleitungen, die von allen Kunden gemeinschaftlich nutzbar und dynamisch mit verschiedenen Zugangs-Rufnummern belegbar sind; und
- eines Rufnummernplans und von Leistungamerkmalen, die kundenindividuell frei gestaltbar **durch** den Kunden einrichtbar sind.

10. Kommunikationsanlage nach Anspruch 9, mit einer Einrichtung (40) zum Einrichten einer kundenindividuellen Zugangs-Rufnummer bezüglich des öffentlichen Netzwerkes.

11. Kommunikationsanlage nach einem der Ansprüche 9 oder 10, wobei ein einem Kunden zugeordneter Datenbereich (34, 36, 38, 39) durch eine Kundenidentifikationsnummer (84) identifiziert ist.

12. Kommunikationsanlage nach Anspruch 11, mit einer Einrichtung zur Ermittlung der Kundenidentifikationsnummer (84) aus einer weltweit eindeutigen Rufnummer bei Ruf aus externer Quelle.

13. Kommunikationsanlage nach Anspruch 11 oder 12, mit einer Einrichtung (66) zur Ermittlung einer Hardwareadresse aus der weltweit eindeutigen Rufnummer mittels der Kundenidentifikationsnummer (84) bei Ruf aus externer Quelle.

14. Kommunikationsanlage nach einem der Ansprüche 11 bis 13, mit einer Einrichtung (66) zur Ermittlung einer Kundenidentifikationsnummer (84) aus einer Hardwareadressse bei Ruf aus interner Quelle.

15. Kommunikationsanlage nach einem der Ansprüche 11 bis 14,wobei die Einrichtung zur Bereitstellung (32) des Rufnummernplans auf einer privaten Telefonanlage basiert, die zur Trennung von verschiedenen Kunden (22, 24, 26, 27) zugeordneten Datenbereichen (34, 36, 38, 39) eingerichtet ist.

16. Kommunikationssystem (10) mit einer Kommunikationsanlage (12) nach einem der Ansprüche 9-15, an die Endgeräte (16, 08, 20, 21) verschiedener Kunden (22, 24, 26, 27) angeschlossen sind.

## Claims

1. Method (90) for operating a communications system (12) which is connected to a public network and is used independently by a plurality of independent customers (22, 24, 26, 27) each having a group of subscribers (16, 18, 20, 21) which is assigned to a customer and has a customer telephone number plan which can be freely configured on a customer-specific basis, **characterized in that** the customers are each provided with a virtual private telecommunications installation having its own data storage and its own data access structure;
**in that** exchange lines are jointly used by all customers and are dynamically assigned different access telephone numbers; and
**in that** the customer sets up the customer telephone number plan and service features for the group of subscribers assigned to it.

2. Method according to Claim 1 having the following method steps:
a system administrator sets up (92) a customer; and
one of the subscribers in the group of subscribers (16, 18, 20, 21) assigned to the customer sets up (98) a customer telephone number plan for said group of subscribers.

3. Method according to Claim 1 or 2, customer-specific access telephone numbers for the public network being set up.

4. Method according to one of Claims 1 to 3, each customer being assigned a customer identification number (84).

5. Method according to Claim 4, the customer identification number (84) being determined from a globally unique telephone number for the called subscriber in the event of a call from an external source.

6. Method according to Claim 5, the customer identification number (84) being used to determine (102, 108 to 116) a hardware address from the globally unique telephone number for the called subscriber in the event of a call from an external source.

7. Method according to one of Claims 4 to 6, the customer identification number (84) being used, in a database of the system, as an identifier for data contents for a customer.

8. Method according to one of the preceding claims, a customer identification number (84) being determined (104, 124; 152, 124') from a hardware address of the calling subscriber in the event of a call from an internal source.

9. Communications installation (12) which is connected to a public network and is used independently by a plurality of independent customers (22, 24, 26, 27) each having a group of subscribers (16, 18, 20, 21) which is assigned to a customer and has a customer telephone number plan which can be freely configured on a customer-specific basis, **characterized by** a device (32) for providing
- virtual private telecommunications installations having their own data storage and their own data access structure;
- exchange lines which can be jointly used by all customers and can be dynamically assigned different access telephone numbers;
- a telephone number plan and service features which can be set up by the customer in a freely configurable manner and on a customer-specific basis.

10. Communications installation according to Claim 9 having a device (40) for setting up a customer-specific access telephone number for the public network.

11. Communications installation according to either of Claims 9 and 10, a customer identification number (84) being used to identify a data area (34, 36, 38, 39) which is assigned to a customer.

12. Communications installation according to Claim 11 having a device for determining the customer identification number (84) from a globally unique telephone number in the event of a call from an external source.

13. Communications installation according to Claim 11 or 12 having a device (66) for determining, by means of the customer identification number (84), a hardware address from the globally unique telephone number in the event of a call from an external source.

14. Communications installation according to one of Claims 11 to 13 having a device (66) for determining a customer identification number (84) from a hardware address in the event of a call from an internal source.

15. Communications installation according to one of Claims 11 to 14, the device for providing (32) the telephone number plan being based on a private telephone installation which is set up to separate data areas (34, 36, 38, 39) assigned to different customers (22, 24, 26, 27).

16. Communications system (10) having a communications installation (12) according to one of Claims 9-15 to which terminals (16, 18, 20, 21) of different customers (22, 24, 26, 27) are connected.

## Revendications

1. Procédé (90) pour faire fonctionner un système (12) de communication, qui est raccordé à un réseau public et qui est utilisé par plusieurs clients (22, 24, 26, 27) indépendants, indépendamment les uns des autres, ayant respectivement un groupe, associé à un client, d'abonnés (16, 18, 20, 21) ayant un plan de numéros d'appel de clients pouvant être conformé librement individuellement par client, **caractérisé en ce qu'**il est mis à disposition des clients, respectivement, une installation de télécommunication privée virtuelle ayant sa propre conservation de données et sa propre structure d'accès aux données ; **en ce que** des lignes de réseau sont utilisées en commun par tous les clients et sont occupées de façon dynamique par divers numéros d'appel d'accès ; et **en ce que** le client établit pour le groupe qui lui est associé d'abonnés le plan de numéros d'appel des clients, ainsi que des facilités offertes à l'usager.

2. Procédé suivant la revendication 1, comprenant les stades
établissement (92) d'une communication avec un client par un administrateur de système ; et
établissement (98) d'un plan de numéros d'appel de clients pour le groupe associé au client d'abonnés (16, 18, 20, 21) par l'un de ces abonnés.

3. Procédé suivant la revendication 1 ou 2, dans lequel il est établi des numéros d'appel d'accès individuels par client par rapport au réseau public.

4. Procédé suivant l'une des revendications 1 à 3, dans lequel il est associé à chaque client un numéro (84) d'identification de client.

5. Procédé suivant la revendication 4, dans lequel, lors de l'appel depuis une source extérieure, il est déterminé à partir d'un numéro d'appel univoque dans le monde entier de l'abonné appelé le numéro (84) d'identification du client.

6. Procédé suivant la revendication 5, dans lequel, lors de l'appel depuis une source extérieure, il est déterminé (102, 108 à 116) à partir du numéro d'appel univoque dans le monde entier de l'abonné appelé une adresse en matériel au moyen du numéro (84) d'identification du client.

7. Procédé suivant l'une des revendications 4 à 6, dans lequel on utilise dans une banque de données du système les numéros (84) d'identification des clients comme identificateurs pour un état de données vis-à-vis d'un client.

8. Procédé suivant l'une des revendications précédentes, dans lequel, lors d'un appel depuis une source interne, on détermine (104, 124 ; 152, 124') à partir de l'adresse en matériel de l'abonné appelant un numéro (84) d'identification de client.

9. Installation (12) de communication qui est raccordée à un réseau public et qui est utilisée par plusieurs clients (22, 24, 26, 27) indépendants, indépendamment les uns des autres, ayant, respectivement, un groupe, associé à un client, d'abonnés (16, 18, 20, 21) ayant un plan de numéros d'appel de clients pouvant être conformés librement individuellement par client, **caractérisée par** un dispositif (32) de mise à disposition
- d'installations de communication privées virtuelles ayant leur propre maintien de données et leur propre structure d'accès aux données ;
- de lignes de réseau, qui peuvent être utilisées en commun par tous les clients et qui peuvent être occupées dynamiquement par des numéros d'appel d'accès différents ; et
- un plan de numéros d'appel et de facilités offertes à l'usager, qui peuvent être conformés de manière libre individuellement par client et qui peuvent être appelés par le client.

10. Installation de communication suivant la revendication 9, comprenant un dispositif (40) d'appel d'un numéro d'appel d'accès individuel au client pour ce qui concerne le réseau public.

11. Installation de communication suivant l'une des revendications 9 ou 10, dans laquelle une zone (34, 36, 38, 39) de données associée à un client est identifiée par un numéro (84) d'identification de client.

12. Installation de communication suivant la revendication 11, comprenant un dispositif de détermination du numéro (84) d'identification de client à partir d'un numéro d'appel univoque dans le monde entier lors de l'appel depuis une source extérieure.

13. Installation de communication suivant la revendication 11 ou 12, comprenant un dispositif (66) de détermination d'une adresse en matériel à partir du numéro d'appel univoque dans le monde entier au moyen du numéro (84) d'identification de client lors de l'appel depuis une source extérieure.

14. Installation de communication suivant l'une des revendications 11 à 13, comprenant un dispositif (66) de détermination d'un numéro (84) d'identification de client à partir d'une adresse en matériel lors de l'appel depuis une source intérieure.

15. Installation de communication suivant l'une des revendications 11 à 14, dans laquelle le dispositif (32) de mise à disposition du plan de numéros d'appel repose sur une installation téléphonique privée qui est conçue pour la séparation de zones (34, 36, 38, 39) de données associées à des clients (22, 24, 26, 27) différents.

16. Système (10) de communication ayant une installation (12) de communication suivant l'une des revendications 9 à 15 sur lequel des terminaux (16, 08, 20, 21) de clients (22, 24, 26, 27) différents sont raccordés.
